# EUROPÄISCHE PATENTSCHRIFT

(11) **EP 3 387 275 B1**
(45) Veröffentlichungstag und Bekanntmachung des Hinweises auf die Patenterteilung: **04.03.2020**
(21) Anmeldenummer: 16816581.9
(22) Anmeldetag: 01.12.2016
(51) Int. Cl.: F16C 17/02, F16C 43/02

(54) **FOLIENLAGER**
FOIL BEARING
PALIERS À FEUILLES

(30) Priorität: 10.12.2015 DE 102015224869
(43) Veröffentlichungstag der Anmeldung: 17.10.2018
(73) Patentinhaber: Schaeffler Technologies AG & Co. KG, 91074 Herzogenaurach (DE)
(72) Erfinder: BRAUN, Wolfgang, 97493 Garstadt (DE); WIRTH, Philipp, 97779 Geroda (DE)
(86) Internationale Anmeldenummer: PCT/DE2016/200567
(87) Internationale Veröffentlichungsnummer: WO 2017/097297

(56) Entgegenhaltungen:
- EP-A1- 2 740 949
- EP-A1- 2 937 584

## Beschreibung

### Gebiet der Erfindung

Die Erfindung betrifft ein Folienlager zum Lagern einer Welle, umfassend ein hülsenartiges Lagergehäuse mit drei über den Innenumfang des Lagergehäuses verteilt angeordneten, jeweils einen Umfangsabschnitt des Lagergehäuses überdeckenden Folienanordnungen, die jeweils eine an der Gehäuseinnenwand anliegende Wellfolie und eine diese überdeckende Deckfolie umfassen, wobei die die Deckfolien in Umfangsrichtung begrenzenden Endkanten der Deckfolien sich jeweils an der Gehäuseinnenwand ausgebildeten Haltemitteln abstützen.

### Hintergrund der Erfindung

Unter Folienlagern versteht man hydrodynamische oder aerodynamische Lager, bei denen die bei unbelastetem Lager die Welle beziehungsweise ganz allgemein die den drehend gelagerten Rotor abstützende Lagerfläche von einer dünnen, verschleißfesten Deckfolie gebildet ist, welche ihrerseits von einer zwischen Deckfolie und Lagergehäusewand angeordneten elastischen Wellfolie abgestützt wird. Im Betrieb bildet sich zwischen der Welle und der Deckfolie ein hydrodynamischer oder aerodynamischer, die Welle tragender Film. Nur bei Start- und Stoppvorgängen kommt es zu einem direkten Bewegungskontakt zwischen Welle und Deckfolie. Folienlager der beschriebenen Art werden bevorzugt für gering belastete, mit hoher Drehzahl laufende Wellen eingesetzt, beispielsweise bei Kompressoren, Gasturbinen, Turboladern und dergleichen.

Eine bewährte Bauform von Lagern der oben beschriebenen Art sind als sogenannte Dreiflächenlager ausgebildete, für beide Drehrichtungen geeignete Folienlager, bei denen drei jeweils eine Deckfolie und eine zugeordnete Wellfolie umfassende Folienanordnungen jeweils einen Innenumfangsabschnitt des Lagergehäuses überdecken. Damit diese Lager für beide Drehrichtungen geeignet sind, müssen die Folienanordnungen in beiden Drehrichtungen gleichermaßen fixiert sein. Außerdem sind sie üblicherweise so aufgebaut, dass die Welle insbesondere im Betrieb in, auf den Lagerquerschnitt bezogen, drei gleichmäßig über den Wellenumfang verteilt angeordneten Berührungszonen, also im Wesentlichen statisch bestimmt, abgestützt wird. Dies verlangt im Allgemeinen eine sehr aufwendige konstruktive und fertigungstechnische Gestaltung insbesondere des Lagergehäuses.

Aus der US 2 002/0054718 A1 ist ein Folienlager der eingangs genannten Art bekannt. Darin stützen sich die Deckfolien über ihre Endkanten an im Querschnitt etwa T-förmigen Halteleisten ab, welche an der Innenseite des Lagergehäuses ausgebildeten sind. Um die erwünschten, für die Bildung eines aerodynamischen Films erforderlichen konvergierenden Spalte (aerodynamic wedges) zu erzeugen, ist der innere Querschnitt der Lagerhülse nicht kreisförmig ausgebildet, sondern setzt sich aus drei Kreisbogensegmenten zusammen, deren Radius jeweils gegenüber dem Lagermittelpunkt exzentrisch versetzt ist derart, dass sich zu den Berührungszonen hin konvergierende Spalte zwischen Welle und Lagergehäuse ergeben. Die elastischen Wellfolien stützen sich in Umfangsrichtung nicht ab, das heißt, sie werden nur von den Deckfolien gehalten und durch diese entsprechend der Form der konvergierenden Spalte gegenüber einer an sich gleichen Wellenhöhe elastisch verformt. Wegen der für die Abstützung der Deckfolien vorgesehenen Halteleisten einerseits und der komplexen Innenquerschnittsform des Lagergehäuses andererseits sind die bekannten Folienlager konstruktiv und fertigungstechnisch sehr aufwendig und teuer. Außerdem sind die Folienanordnungen wegen der starren Abstützung der Deckfolien an den Halteleisten nicht in der Lage, sich an durch mechanische oder wärmebedingte Belastungen verursachte Verformungen anzupassen. Ein weiteres gattungsgemäßes Folienlager ist aus der EP 2 937 584 A1 bekannt.

### Aufgabe der Erfindung

Vor diesem Hintergrund liegt der Erfindung die Aufgabe zugrunde, ein Folienlager der im Oberbegriff des Anspruchs 1 genannten Art zu schaffen, das konstruktiv und fertigungstechnisch einfach ist, und bei dem die Folienanordnungen sich an im Betrieb auftretende Verformungen anpassen können.

### Beschreibung der Erfindung

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Demnach geht die Erfindung aus von einem Folienlager zum Lagern einer Welle, umfassend ein hülsenartiges Lagergehäuse mit drei über den Innenumfang des Lagergehäuses verteilt angeordneten, jeweils einen Umfangsabschnitt des Lagergehäuses überdeckenden Folienanordnungen, die jeweils eine an der Gehäuseinnenwand anliegende Wellfolie und eine diese überdeckende Deckfolie umfassen, wobei die die Deckfolien in Umfangsrichtung begrenzenden Endkanten der Deckfolien sich jeweils an der Gehäuseinnenwand ausgebildeten Haltemitteln abstützen.

Zur Lösung der gestellten Aufgabe ist dabei vorgesehen, dass an der Gehäuseinnenseite längs Mantellinien sich erstreckende, schräg von innen nach außen in die Gehäusewand hineinragende Stecknuten ausgebildet sind, deren jede jeweils eine Endkante einer Deckfolie sowie eine an der zugeordneten Wellfolie ausgebildete Endkante aufnimmt, und dass bei im Querschnitt kreisförmiger Innenkontur des Lagergehäuses die Wellfolien jeweils von ihrem auf die Umfangsrichtung des Lagergehäuses bezogen mittleren Bereich aus zu ihren Endkanten hin abnehmende Wellenhöhen aufweisen.

Eine konstruktive und insbesondere fertigungstechnische Vereinfachung des Lagergehäuses ergibt sich einerseits daraus, dass anstelle von radial nach innen vorstehenden Halteleisten zur Abstützung der Folienanordnungen in Umfangsrichtung, die im Allgemeinen eine Bearbeitung mit hohem Materialabtrag erfordern, einfache Stecknuten in die Lagergehäusewand eingebracht, beispielsweise geschnitten oder erodiert sind, in welche die Endkanten der Folienanordnung einfach axial eingeschoben werden können. Dadurch, dass die Stecknuten sowohl die Endkanten der Deckfolien als auch die Endkanten der Wellfolien aufnehmen, sind auch die letzteren gegen eine Verschiebung in Umfangsrichtung gesichert. Ein anderer Vorteil der erfindungsgemäßen Lösung liegt vor allem darin, dass die Innenkontur des Lagergehäuses kreisrund ist, wobei die erwünschten konvergierenden Spalte durch die besondere, neuartige Gestaltung der Wellfolien mit ihren von ihrem mittleren Bereich aus zu den Endkanten hin abnehmenden Wellenhöhen geformt werden, wie anhand eines Ausführungsbeispiels näher erläutert wird. Die Tiefe der Stecknuten ist größer als die Eindringtiefe der zugeordneten Endkanten bei unbelasteter Deckfolie. Die Tiefe der Stecknuten ist auf die Länge der Deck- und Wellfolien so abgestimmt, dass die mit einer Gleitpassung in den Stecknuten aufgenommenen Endkanten der Folienanordnungen sich sowohl bei temperaturbedingter Ausdehnung der Folien als auch bei einer Längenänderung aufgrund der Lagerbelastung in den Stecknuten verschieben und die Folienanordnungen sich so an die jeweiligen Betriebsbedingungen anpassen können.

Eine bevorzugte Ausgestaltung der vorliegenden Erfindung sieht vor, dass die Stecknuten die zugeordneten Endkanten der Deckfolien und der Wellfolien mit einer Gleitpassung aufnehmen.

Gemäß einer weiteren Ausgestaltung der Erfindung ist vorgesehen, dass im Bereich jeweils einer der beiden einer Folienanordnung zugeordneten Stecknuten eine oder mehrere die Gehäusewand durchsetzende Gewindebohrungen vorgesehen sind, welche die Endkanten in der jeweiligen Stecknut fixierende Klemmschrauben aufnehmen. Die oben beschriebene Anpassung an die jeweiligen Betriebsbedingungen erfolgt dabei jeweils an dem nicht fixierten Ende der Folienanordnungen. Es sind auf diese Weise beliebige Kombinationen von nicht fixierten oder einseitig fixierten Folienanordnungen möglich. Die Klemmschrauben dienen zugleich als Sicherung der Folienanordnungen in axialer Richtung des Folienlagers.

### Kurze Beschreibung der Zeichnungen

Eine bevorzugte Ausführungsform des erfindungsgemäß ausgebildeten Folienlagers wird nachfolgend unter Bezugnahme auf die beigefügten Zeichnungen näher erläutert. Dabei zeigen:
- Figur 1: einen Querschnitt durch ein erfindungsgemäßes Folienlager, welches als Dreiflächenlager ausgebildet ist,
- Figur 2: ein Detail der Figur 1 in vergrößerter Darstellung,
- Figur 3: eine perspektivische Ansicht eines Lagergehäuses für ein Folienlager, und
- Figur 4: schematisch eine Wellfolie für ein Folienlager gemäß Figur 1.

### Ausführliche Beschreibung der Zeichnungen

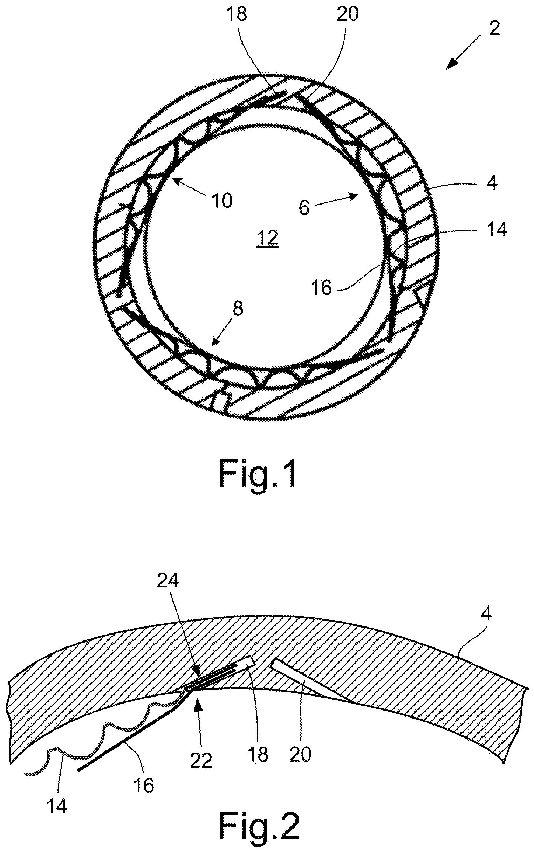

Das in der Figur 1 dargestellte, als sogenanntes Dreiflächenlager ausgebildete Folienlager 2 umfasst ein hülsenartiges Lagergehäuse 4, drei über den Innenumfang des Lagergehäuses 4 verteilt angeordnete Folienanordnungen 6, 8, 10 und eine im Folienlager drehbar gelagerte Welle 12.

Jede der drei Folienanordnungen 6, 8, 10 umfasst eine an der Innenwand des Lagergehäuses 4 direkt anliegende Wellfolie 14 und eine diese überdeckende Deckfolie 16. An der Gehäuseinnenseite sind längs Mantellinien des Lagergehäuses sich erstreckende, schräg von innen nach außen in die Gehäusewand hineinragende Stecknuten 18, 20 ausgebildet, von denen jede jeweils eine Endkante 22 einer Deckfolie 16 sowie eine an der zugeordneten Wellfolie 14 ausgebildete Endkante 24 aufnimmt, wie insbesondere in Figur 2 gut erkennbar ist. Die Ausrichtung der Stecknuten 18, 20 folgt im Wesentlichen der Ausrichtung der in Umfangsrichtung auslaufenden Endkanten 22, 24.

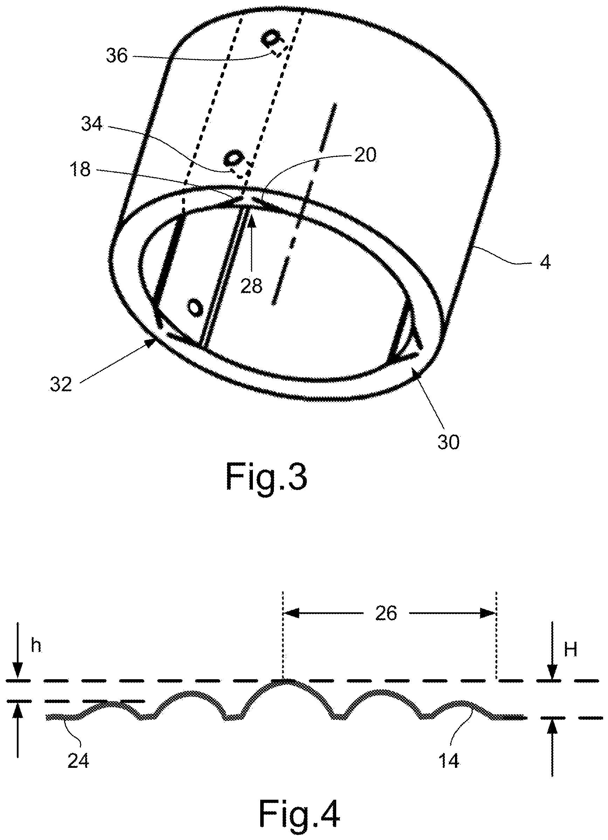

Die Innenkontur des Lagergehäuses 4 ist im Querschnitt kreisförmig ausgebildet, und die Wellfolien 14 weisen jeweils von ihrem auf die Umfangsrichtung des Lagergehäuses 4 bezogen mittleren Bereich 26 aus zu ihren Endkanten 24 hin abnehmende Wellenhöhen H, h auf, wie insbesondere Figur 4 zeigt. Die Differenz h der Wellenhöhen von der Wellfolienmitte zu den Endkanten hin kann beispielsweise in der Größenordnung von 10 bis 100 % der maximalen Wellenhöhe H betragen.

Figur 3 zeigt in einer perspektivischen Darstellung ein Lagergehäuse 4 für ein sogenanntes Dreiflächenlager, mit drei um jeweils 120° versetzt und über den Umfang verteilt angeordneten Stecknutenpaaren 28, 30, 32, die jeweils Endkanten 22, 24 benachbarter Folienanordnungen 6, 8, 10 aufnehmen. Um die Folienanordnungen 6, 8, 10 insbesondere auch in Achsrichtung des Folienlagers 2 zu fixieren, sind im Bereich jeweils einer der beiden einer Folienanordnung 6, 8, 10 zugeordneten Stecknuten 18, 20 zwei die Gehäusewand durchsetzende Gewindebohrungen 34, 36 vorgesehen, welche die Endkanten 22, 24 in der jeweiligen Stecknut fixierende Klemmschrauben aufnehmen, wie nicht im einzelnen dargestellt ist. Bei Bedarf können auch jeder Stecknut entsprechende Gewindebohrungen und Klemmschrauben zugeordnet werden.

### Bezugszeichenliste

- 2: Folienlager
- 4: Lagergehäuse
- 6: Erste Folienanordnung
- 8: Zweite Folienanordnung
- 10: Dritte Folienanordnung
- 12: Welle
- 14: Wellfolie
- 16: Deckfolie
- 18: Stecknut
- 20: Stecknut
- 22: Endkante
- 24: Endkante
- 26: Bereich
- 28: Erstes Stecknutenpaar
- 30: Zweites Stecknutenpaar
- 32: Drittes Stecknutenpaar
- 34: Erste Gewindebohrung
- 36: Zweite Gewindebohrung

## Patentansprüche

1. Folienlager (2) zum Lagern einer Welle (12), umfassend ein hülsenartiges Lagergehäuse (4) mit drei über den Innenumfang des Lagergehäuses (4) verteilt angeordneten, jeweils einen Umfangsabschnitt des Lagergehäuses (4) überdeckenden Folienanordnungen (6, 8, 10), die jeweils eine an der Gehäuseinnenwand anliegende Wellfolie (14) und eine diese überdeckende Deckfolie (16) umfassen, wobei die Wellfolien (14) jeweils von ihrem auf die Umfangsrichtung des Lagergehäuses bezogen mittleren Bereich (26) aus zu ihren Endkanten (24) hin abnehmende Wellenhöhen (H, h) aufweisen und an der Gehäuseinnenseite längs der Mantellinien sich erstreckende, schräg von innen nach außen in die Gehäusewand hineinragende Stecknuten (18, 20) ausgebildet sind, deren jede jeweils eine Endkante (22) einer Deckfolie (16) und eine Endkante (24) der zugeordneten Wellfolie (14) aufnimmt, **dadurch gekennzeichnet, dass** die Enden der jeweils benachbarten Stecknuten (18, 20) einander zugerichtet und sich nicht kreuzend mit einem Abstand zueinander angeordnet sind, wobei die Tiefe der Stecknuten (18, 20) größer ist als die Eindringtiefe der zugeordneten Endkanten (22, 24) der Wellfolien (14) und der Deckfolien (16) bei unbelasteter Deckfolie (16).

2. Folienlager nach Anspruch 1, **dadurch gekennzeichnet, dass** die Stecknuten (18, 20) die zugeordneten Endkanten (22, 24) der Deckfolien (16) und der Wellfolien (14) mit einer Gleitpassung aufnehmen.

3. Folienlager nach Anspruch 1 oder 2, **dadurch gekennzeichnet, dass** im Bereich jeweils einer Stecknut (18) der beiden einer Folienanordnung (10) zugeordneten Stecknuten (18, 20) eine oder mehrere die Gehäusewand durchsetzende Gewindebohrungen (34, 36) vorgesehen sind, welche die Endkanten (22, 24) in der jeweiligen Stecknut (18) fixierende Klemmschrauben aufnehmen.

## Claims

1. A foil bearing (2) for supporting a shaft (12) comprising a sleeve-like bearing housing (4) with three foil arrangements (6, 8, 10) distributed over the inner circumference of the bearing housing (4), each covering a peripheral segment of the bearing housing (4), and each comprising a corrugated foil (14) lying against the housing inner wall, and a top foil (16) covering said corrugated foil, wherein the corrugated foils (14) each have decreasing corrugation heights (H, h), from the centre region (26) to their end edges (24) relative to the circumferential direction of the bearing housing, and socket grooves (18, 20) are formed extending on the inside of the housing along the generating lines, obliquely protruding from inside to outside into the housing wall, each receiving one end edge (22) of a top foil (16) and one end edge (24) of the associated corrugated foil (14), **characterised in that** the ends of the adjacent socket grooves (18, 20) are directed towards one another and are arranged with a distance from one another without crossing, wherein the depth of the socket grooves (18, 20) is greater than the penetration depth of the associated end edges (22, 24) of the corrugated foils (14) and the top foils (16) when the top foil (16) is unloaded.

2. The foil bearing according to claim 1, **characterised in that** the socket grooves (18, 20) receive the associated end edges (22, 24) of the top foils (16) and the corrugated foils (14) with a sliding fit.

3. The foil bearing according to claim 1 or 2, **characterised in that,** in the region of each socket groove (18) of the two socket grooves (18, 20) associated with a foil arrangement (10), one or more threaded holes (34, 36) passing through the housing wall are provided, which receive the end edges (22, 24) in the clamping screws affixing the respective socket groove (18).

## Revendications

1. Palier à feuilles (2) destiné à supporter un arbre (12) comprenant un logement de palier (4) en forme de manchon qui comporte trois agencements de feuilles (6, 8, 10) répartis sur la circonférence intérieure du logement de palier (4), recouvrant chacun une partie périphérique du logement de palier (4), chacun comprenant une feuille ondulée (14) en appui sur la paroi intérieure du logement et une feuille de recouvrement (16) recouvrant celle-ci, les feuilles ondulées (14) présentant respectivement des hauteurs d'ondulation (H, h) décroissantes depuis leur région centrale (26) rapportée à la direction circonférentielle du logement de palier, vers leurs bords d'extrémité (24), des rainures d'enfichage (18, 20) s'étendant du côté intérieur du logement le long de lignes d'enveloppe et saillant obliquement de l'intérieur vers l'extérieur dans la paroi de logement étant prévues, chacune recevant un bord d'extrémité (22) d'une feuille de recouvrement (16) et un bord d'extrémité (24) de la feuille ondulée (14) associée, **caractérisé en ce que** les extrémités des rainures d'enfichage (18, 20) adjacentes respectives sont tournées les unes vers les autres et sont disposées avec une distance entre elles pour ne pas se croiser, la profondeur des rainures enfichables (18, 20) étant supérieure à la profondeur de pénétration des bords d'extrémité (22, 24) associés des feuilles ondulées (14) et des feuilles de recouvrement (16) lorsque la feuille de couverture (16) n'est pas chargée.

2. Palier à feuilles selon la revendication 1, **caractérisé en ce que** les rainures d'enfichage (18, 20) reçoivent les bords d'extrémité (22, 24) associés des feuilles de recouvrement (16) et des feuilles ondulées (14) selon un ajustement glissant.

3. Palier à feuilles selon la revendication 1 ou 2, **caractérisé en ce que,** dans la région d'une rainure d'enfichage respective (18) des deux rainures d'enfichage (18, 20) associées à un agencement de feuilles (10), un ou plusieurs trous filetés (34, 36) traversant la paroi du logement sont prévus, lesquels reçoivent les bords d'extrémité (22, 24) dans les vis de serrage fixant la rainure d'enfichage (18) respective.
